# EUROPEAN PATENT APPLICATION

(11) **EP 2 061 219 A1**
(43) Date of publication of application: **20.05.2009**
(21) Application number: 07301552.1
(22) Date of filing: 15.11.2007
(51) Int. Cl.: H04M 1/2745

(54) **Method of selecting a set of phonebook entries in a card**

(71) Applicant: GEMPLUS, 13420 Gémenos (FR)
(72) Inventor: Brun, Alain, 13400, AUBAGNE (FR); Faure, Frederic, 13260, CASSIS (FR); Foesser, Christophe, 13600, LA CIOTAT (FR); Halle, David, 83200, TOULON (FR); Mallet, Lionel, 13007, MARSEILLE (FR)

(57) **Abstract**

The invention is a method of selecting a set of phonebook entries in a subscriber identity card intended to exchange data with a connected mobile equipment. The subscriber identity card has a phonebook intended to comprise several entries, first means able to identify properties of the connected mobile equipment, a memory intended to store at least a relevancy marker, second means able to spy exchanged data and to update said relevancy marker, third means able to select a set of phonebook entries. Said method comprises the steps of:
a) identifying properties of the connected mobile equipment,
b) updating the relevancy marker according to spied exchanged data,
c) selecting a set of phonebook entries according to a policy depending on the relevancy marker and on the connected mobile equipment properties,
d) sending the selected set of phonebook entries to the connected mobile equipment.

## Description

### (Field of the invention)

The present invention relates to methods of selecting a set of phonebook entries in a card. It relates particularly to methods of selecting a set of phonebook entries in a subscriber identity card like a SIM card.

### (Prior art)

Several standards for SIM-based phonebook have been created and deployed in the Telecom domain. For example, the two Telecom standards 2G and 3G differ in the following features: the maximum number of entry that can be managed in a phonebook and the number and fields belonging to each entry of a phonebook. In particular, a phonebook compliant with the 2G standard cannot contain more than 255 entries when a phonebook compliant with the 3G standard may manage a large amount of entries depending on the available memory size. Both mobile equipments and SIM cards must implement one or several Telecom standards. Thus when a SIM card is connected to a mobile equipment, the phonebook standard managed by the mobile equipment may be different from the phonebook standard managed by the SIM card. In other words, mobile equipment and a connected SIM card may have different phonebook capabilities. In particular, when the phonebook capabilities of the mobile equipment are more limited than the phonebook capabilities of the SIM card, a user cannot take advantage of the whole content of the phonebook managed by the SIM card. Only the first N entries of the phonebook managed by the SIM card can be accessed through the mobile equipment, where N is the maximum phonebook entries according to the phonebook standard of the mobile equipment. All entries placed after the Nth position in the phonebook managed by the SIM card cannot be reached by the user via the mobile equipment.

### (Summary of the Invention)

An object of the invention is to solve the above mentioned technical problem.

The object of the present invention is a subscriber identity card intended to exchange data with a connected mobile equipment. Said subscriber identity card comprises a microprocessor, a communication interface, a phonebook intended to comprise several entries, an operating system, first means for identifying properties of the connected mobile equipment. Said subscriber identity card also comprises a memory intended to store at least a relevancy marker, second means for spying exchanged data and updating the at least relevancy marker. Said subscriber identity card also comprises third means for selecting a set of phonebook entries according to a policy depending on the at least relevancy marker and on the connected mobile equipment properties.

Advantageously, the spied exchanged data may be a setup call and/or call control and/or SMS in and/or SMS out, and/or MMS in and/or MMS out.

The set of phonebook entries selected by third means may be ordered according to said relevancy marker.

Each phonebook entry may comprise several fields and said third means may select a subset of fields belonging to the selected set of phonebook entries.

Advantageously, each relevancy marker may comprise a plurality of counters, and each of said counters may be associated with a phonebook entry.

Alternatively, each relevancy marker may comprise a plurality of counters, and each of said counters may be associated with a field of phonebook entries.

Said subscriber identity card may comprise fourth means for prompting the connected mobile equipment to delete from the phonebook an entry which has not been used since a predefined period of time.

Another object of the invention is a method of selecting a set of phonebook entries in a subscriber identity card intended to exchange data with a connected mobile equipment. Said subscriber identity card has a microprocessor, a phonebook intended to comprise several entries, an operating system and first means for identifying properties of the connected mobile equipment. Said subscriber identity card also has a memory intended to store at least a relevancy marker, second means for spying exchanged data and for updating the at least relevancy marker and third means for selecting a set of phonebook entries. Said method comprises the following step:
a) identifying properties of the connected mobile equipment,
b) updating the relevancy marker according to spied exchanged data,
c) selecting a set of phonebook entries according to a policy depending on the relevancy marker and on the connected mobile equipment properties,
d) sending the selected set of phonebook entries to the connected mobile equipment.

Advantageously, said subscriber identity card may comprise a property database, and said first means may get an identifier from the connected mobile equipment. Properties of the connected mobile equipment may be identified according to the property database and said identifier.

Alternatively, said connected mobile equipment may send its properties to the subscriber identity card.

After a predefined event, said second means may prompt the connected mobile equipment to ask a refresh of the phonebook.

Advantageously, said predefined event may be a new phonebook entry creation and/or a deletion of a phonebook entry and/or an update operation of a relevancy marker.

The subscriber identity card may be issued by an operator and the policy of step c) may be defined by said operator and/or a user of the connected mobile equipment.

Advantageously, the policy of step c) may comprise a first set of rules related to incoming data and a second set of rules related to outgoing data.

Exchanged data spied by said second means may be incoming and/or outgoing messages and the selected entries may be ordered according to the relevancy marker.

Each phonebook entry may comprise a call address and a date of the last call, and the selected entries may be ordered according to the last called addresses.

Each phonebook entry may comprise a home network operator identifier and the selected entries may be ordered according to the home network operator identifier.

Each phonebook entry may comprise a type of message and the selected entries may be ordered according to the type of message.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically the architecture of a subscriber identity card of SIM smart card type according to the invention;
- Figure 2 is an example of algorithm for selecting a set of phonebook entries according to the invention;
- Figure 3 is an example of phonebook content in a SIM card;
- Figure 4 is an example of relevancy marker according to the invention; and
- Figure 5 is an example of a set of phonebook entries selected according to the invention.

### (Detailed description of the preferred embodiments)

The invention may apply to any types of electronic subscriber identity card managing a phonebook. In this specification, the subscriber identity card is a SIM card but it could be any other kind of electronic token comprising both subscriber identity data and phonebook data.

An advantage of the invention is to provide the mobile equipment user with a solution for accessing the more relevant data stored in the phonebook managed in the SIM card.

Another advantage of the invention is to allow customizing the subset of phonebook data displayed by the mobile equipment. The invention allows customizing several criteria according to user's needs: selection of relevant phonebook entries, selection of fields belonging to phonebook entries, order of selected phonebook entries.

Another advantage of the invention is to allow keeping the existing mobile equipments unchanged. The invention only requires the implementation of specific means in the SIM card.

The invention may apply to every phonebook managed in a subscriber identity card. In particular, it may apply to phonebooks having a first part of data stored into subscriber identity card and a second part of data stored outside the subscriber identity card.

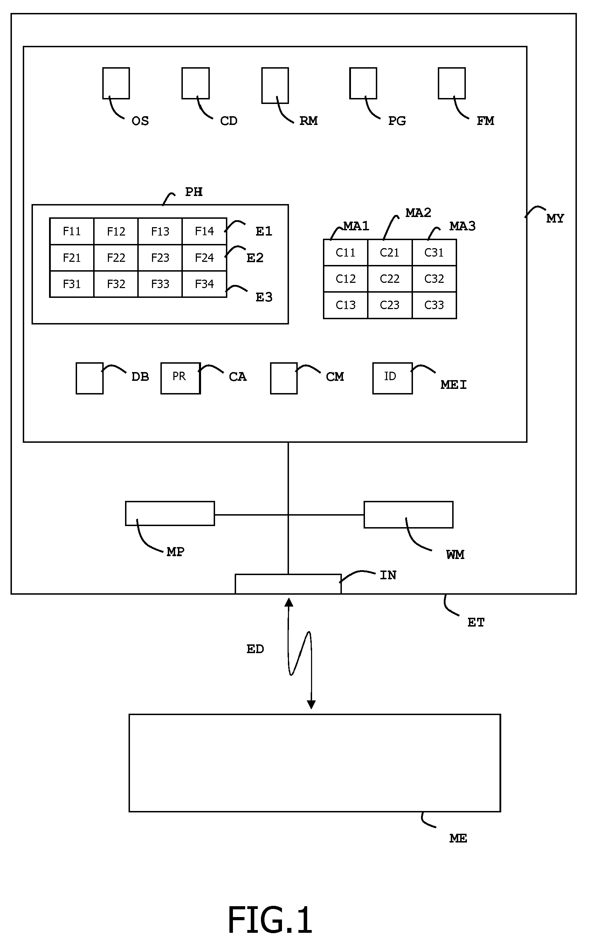

Figure 1 shows the architecture of a SIM card as an example of a subscriber identity card according to a preferred embodiment of the invention. The SIM card ET contains a microprocessor MP, a communication interface IN, a memory MY and a working memory WM like a RAM. The communication interface IN is connected to a mobile equipment ME and allows exchanging data ED with the connected mobile equipment ME. The memory MY is a non volatile memory like EEPROM or Flash memory. The memory MY contains an operating system OS, a phonebook PH, three relevancy markers MA1 to MA3 and an area CA for storing the mobile equipment properties PR. The memory MY contains first means CD able to identify the properties of the connected mobile equipment ME. The memory MY contains second means RM able to spy exchanged data ED and to update the relevancy markers MA1 to MA3. The memory MY contains third means PG able to select a set SE of phonebook entries E1, E2, E3. Each entry contains four fields F11 to F14. This example is not restrictive and each entry may contain more or less than four fields.

Third means PG use a policy depending on the relevancy markers MA1 to MA3 and on the connected mobile equipment properties PR for selecting the set of entries. Each relevancy marker contains several counters C11 to C13. The policy may be stored into the third means PG or in a dedicated memory area not shown on Figure 1. The memory MY contains fourth means FM able to prompt the connected mobile equipment ME to delete an entry from the phonebook PH. The fourth means FM may be activated when an entry has not been used since a predefined period of time. The memory MY contains an area MEI dedicated to storage of an identifier of the connected mobile equipment ME. The memory MY contains a property database DB storing properties of mobile equipments.

The memory MY may consist in a unique circuit or several circuits that may be of different types.

The operating system OS may comprise a virtual machine.

The microprocessor MP cooperates with the working memory WM and is intended to run the operating system OS. First, second, third and fourth means may be either software applications run by the microprocessor MP or hardware designed. The four means may be implemented as four distinct elements or merged in one or several elements.

In a preferred embodiment, the four means are implemented in a SimToolkit application.

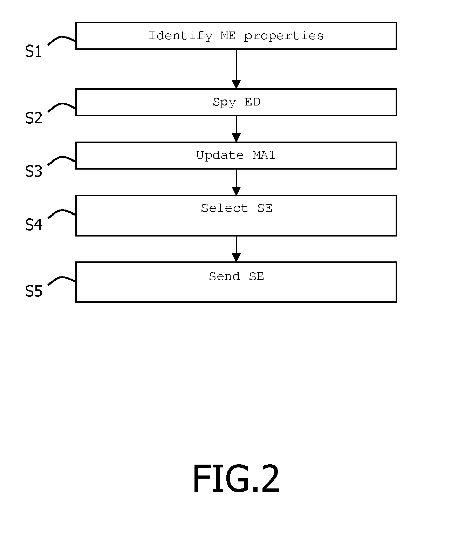

Figure 2 shows an example of algorithm for selecting a set of phonebook entries according to the invention. After the SIM card initialization done by the connected mobile phone ME, first means CD identify the properties PR of the connected mobile equipment ME at step S1. For example, the SIM card gets an identifier ID from the connected mobile equipment ME then finds the relevant properties PR by seeking in the property database DB. Then found properties PR may be stored in the CA area.

The SIM card may send a proactive command such as Provide Local Information command in order to get the identifier ID of the connected mobile phone ME.

Advantageously, the identifier ID retrieved by the SIM card may be an International Mobile Equipment Identity known as IMEI.

Alternatively the database DB may be stored in a distant server and the SIM card may retrieve the relevant properties from the distant server.

In another implementation, the mobile phone ME may send its phonebook capabilities to the SIM, for example into the Terminal Profile at SIM initialization stage.

Then the second means RM is activated and spies all data exchanges between the mobile equipment ME and the SIM card during step S2. In particular, second means RM spies each communication coming in or going out of the terminal equipment, and advantageously any action performed on the contacts of the terminal equipment.

Alternatively, the second means RM may be in the terminal equipment ME and the result of the spying may be stored into the SIM card.

When an outgoing/incoming message is spied, second means RM checks if the address of the caller or party called is stored inside the phonebook managed by the SIM card. If so, second means RM updates relevancy marker MA1 to MA3 at step S3. This update operation may be performed by incrementing a counter associated to the spied address.

When the connected mobile equipment asks for a refresh of the phonebook content, the third means PG is activated at step S4. The third means PG dynamically generates a set SE of phonebook entries according to a predefined policy, the mobile equipment properties PR and the whole content of the phonebook PH managed by the SIM card. For example if the SIM card has a phonebook compliant with the 3G standard and the mobile equipment has properties corresponding to the 2G standard, the third means PG will generate a set SE of 254 entries maximum.

Then at step S5, the generated set SE of phonebook entries is sent to the connected mobile equipment. For example, the generated set SE may correspond to the content of the EF_{ADN} file which is used by the connected mobile equipment for managing the phonebook.

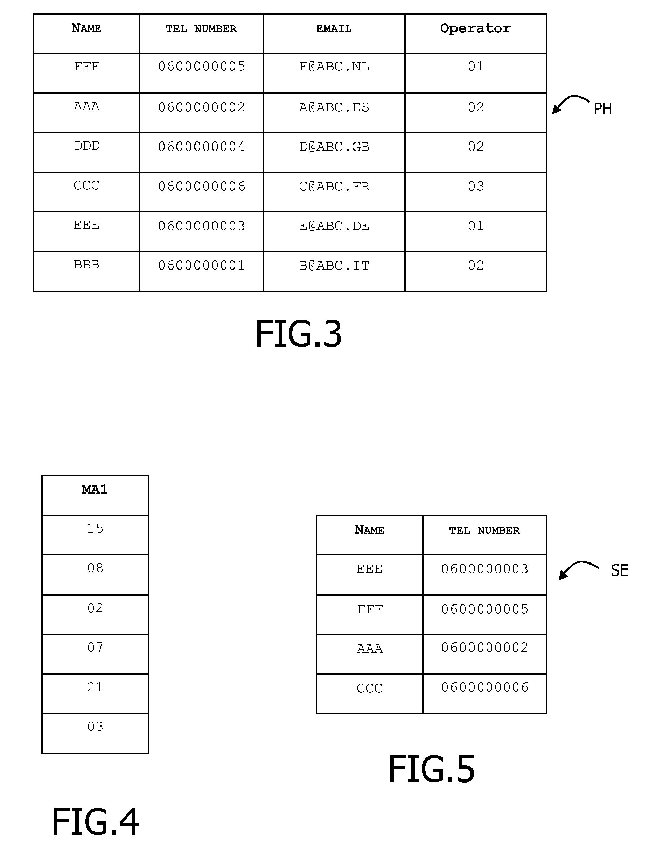

Figure 3 shows an example of phonebook contents managed by the SIM card. This phonebook PH contains four fields and six entries.

Figure 4 shows an example of relevancy marker MA1 stored in the memory MY. The relevancy marker MA1 contains six counters. Each counter is associated to a phonebook entry. In the example of Figure 4, the relevancy marker MA1 corresponds to the number of calls received for the associated phonebook entry.

The properties PR are assumed to be limited to a maximum of four entries and only the two fields Name and Tel Number managed by the mobile equipment. Assuming that the policy is set for selecting the most often called entries in a descending order, the set SE of phonebook entries generated by the third means PG is shown at Figure 5. The generated set SE contains four entries with a subset of two fields, ordered according to the relevancy market MA1.

Advantageously, the policy may contain several rules. Some rules may be related to incoming data and other rules may be related to outgoing data. The policy may be defined by the operator who issued the SIM card and/or the user of the connected mobile equipment. A dedicated application embedded in the SIM card and/or the mobile equipment may allow the update operation of said policy.

Alternatively, the relevancy marker and the policy used by the third means PG may be set for generating a set of phonebook entry chosen according to the type of message, the last called addresses or the only one belonging to the home network operator.

Advantageously, the relevancy markers may be updated by the operator and/or by the user of the connected mobile equipment.

Advantageously, the second means RM may get time data from the connected mobile equipment. The policy used by the third means PG may be set for generating a set of phonebook entry chosen according to the most used within a predefined period of time.

Alternatively, second means RM may get time data from a clock embedded in the subscriber identity card.

Advantageously, the SIM card may have fourth means FM able to prompt the connected mobile equipment ME to delete from the phonebook PH an entry not used since a predefined period of time.

Advantageously, when an entry is deleted from the phonebook PH, the associated counters of relevancy marker are reset. The reset operation may be performed by the second means RM.

Alternatively, the relevancy markers may contain several counters associated with fields of phonebook entry. For example, relevancy markers may contain four counters associated to each of four fields of the phonebook shown at Figure 1.

Advantageously, the second means RM may prompt the connected mobile equipment ME to ask a refresh of the phonebook PH when a predefined event occurs. This operation ensures that the mobile equipment gets the up-to-date phonebook contents.

Advantageously, the predefined event may be a creation of a new phonebook entry and/or a deletion of a phonebook entry and/or an update operation of a relevancy marker.

Advantageously, a dedicated counter CM may store a threshold value associated to the last generated set SE of phonebook entry. The counter CM may be stored in the memory MY. When an update operation of a relevancy marker is carried out by the second means RM, a comparison may be done between the counter CM and the new value of the updated relevancy marker. This comparison allows the SIM to check if the last generated set SE of phonebook entries is still up-to-date. If necessary the second means RM prompts the connected mobile equipment ME to ask a refresh of the phonebook.

## Claims

1. A subscriber identity card (ET) intended to exchange data (ED) with a connected mobile equipment (ME), said subscriber identity card (ET) comprising:
- a microprocessor (MP),
- a communication interface (IN),
- a phonebook (PH) intended to comprise several entries (E1, E2, E3),
- an operating system (OS),
- first means (CD) for identifying properties (PR) of the connected mobile equipment (ME),
**characterized in that** said subscriber identity card (ET) comprises:
- a memory (MY) intended to store at least a relevancy marker (MA1, MA2, MA3),
- second means (RM) for spying exchanged data (ED) and updating the at least relevancy marker (MA1),
- third means (PG) for selecting a set (SE) of phonebook entries (E1, E2, E3) according to a policy depending on the at least relevancy marker (MA1) and on the connected mobile equipment properties (PR).

2. A subscriber identity card (ET) according to claim 1, wherein spied exchanged data (ED) is a setup call and/or call control and/or SMS in and/or SMS out, and/or MMS in and/or MMS out.

3. A subscriber identity card (ET) according to one of claims 1 to 2, wherein the set (SE) of phonebook entries selected by third means (PG) is ordered according to said relevancy marker (MA1, MA2, MA3).

4. A subscriber identity card (ET) according to one of claims 1 to 3, wherein each phonebook entry (E1, E2, E3) comprises several fields (F11, F12, F13, F14) and wherein said third means (PG) selects a subset of fields belonging to the selected set (SE) of phonebook entries.

5. A subscriber identity card (ET) according to claim 4, wherein each relevancy marker (MA1, MA2, MA3) comprises a plurality of counters (C11, C12, C13), and wherein each of said counters is associated with a phonebook entry (E1, E2, E3).

6. A subscriber identity card (ET) according to claim 4, wherein each relevancy marker (MA1, MA2, MA3) comprises a plurality of counters (C11, C12, C13), and wherein each of said counters is associated with a field of phonebook entries (E1, E2, E3).

7. A subscriber identity card (ET) according to one of claims 1 to 6, wherein said subscriber identity card (ET) comprises fourth means (FM) for prompting the connected mobile equipment (ME) to delete from the phonebook (PH) an entry not used since a predefined period of time.

8. A method of selecting a set of phonebook (PH) entries in a subscriber identity card (ET) intended to exchange data (ED) with a connected mobile equipment (ME), said subscriber identity card (ET) having a microprocessor (MP), a phonebook (PH) intended to comprise several entries (E1, E2, E3), an operating system (OS), first means (CD) for identifying properties (PR) of the connected mobile equipment (ME), a memory (MY) intended to store at least a relevancy marker (MA1, MA2, MA3), second means (RM) for spying exchanged data (ED) and for updating the at least relevancy marker (MA1), third means (PG) for selecting a set (SE) of phonebook entries (E1, E2, E3), said method comprises the following step:
a) identifying (S1) properties (PR) of the connected mobile equipment (ME),
**characterized in that** said method comprises the further steps:
b) updating (S3) the relevancy marker (MA1) according to spied exchanged data (ED),
c) selecting (S4) a set (SE) of phonebook entries according to a policy depending on the relevancy marker (MA1) and on the connected mobile equipment properties (PR),
d) sending (S5) the selected set (SE) of phonebook entries to the connected mobile equipment (ME).

9. A method according to claim 8, wherein said subscriber identity card (ET) comprises a property database (DB), wherein said first means (CD) gets an identifier (ID) from the connected mobile equipment (ME) and wherein properties of the connected mobile equipment (ME) are identified according to the property database (DB) and said identifier (ID).

10. A method according to claim 8, wherein said connected mobile equipment (ME) send its properties (PR) to the subscriber identity card (ET).

11. A method according to one of claims 8 to 10, wherein after a predefined event, said second means (RM) prompts the connected mobile equipment (ME) to ask a refresh of the phonebook (PH).

12. A method according to claim 11, wherein said predefined event is a new phonebook entry creation and/or a deletion of a phonebook entry and/or an update operation of a relevancy marker (MA1, MA2, MA3).

13. A method according to one of claims 8 to 12, wherein the subscriber identity card (ET) is issued by an operator and wherein the policy of step c) is defined by said operator and/or a user of the connected mobile equipment (ME).

14. A method according to one of claims 8 to 13, wherein the policy of step c) comprises a first set of rules related to incoming data and a second set of rules related to outgoing data.

15. A method according to one of claims 8 to 14, wherein exchanged data (ED) spied by said second means (RM) is incoming and/or outgoing messages and wherein the selected entries are ordered according to the relevancy marker (MA1, MA2, MA3).

16. A method according to claim 15, wherein each phonebook entry (E1, E2, E3) comprises a call address and a date of the last call, and wherein the selected entries are ordered according to the last called addresses.

17. A method according to claim 15, wherein each phonebook entry (E1, E2, E3) comprises a home network operator identifier and wherein the selected entries are ordered according to the home network operator identifier.

18. A method according to claim 15, wherein each phonebook entry (E1, E2, E3) comprises a type of message and wherein the selected entries are ordered according to the type of message.
